# EUROPÄISCHE PATENTSCHRIFT

(11) **EP 3 774 633 B1**
(45) Veröffentlichungstag und Bekanntmachung des Hinweises auf die Patenterteilung: **03.06.2026**
(21) Anmeldenummer: 19711938.1
(22) Anmeldetag: 26.03.2019
(51) Int. Cl.: B66B 25/00, B66B 5/00

(54) **VERFAHREN UND VORRICHTUNG ZUM MASCHINENUNTERSTÜTZTEN RAPPORTIEREN VON FEHLERZUSTÄNDEN BETREFFEND KOMPONENTEN EINER PERSONENTRANSPORTANLAGE SOWIE ZUM MASCHINENUNTERSTÜTZTEN INFORMIEREN EINER ÜBERWACHUNGSEINRICHTUNG ÜBER RAPPORTIERTE FEHLERZUSTÄNDE**
METHOD AND DEVICE FOR MACHINE-ASSISTED REPORTING OF FAULT CONDITIONS RELATING TO COMPONENTS OF A PERSON TRANSPORT INSTALLATION AND FOR MACHINE-ASSISTED NOTIFICATION OF A MONITORING STATION OF REPORTED FAULT CONDITIONS
PROCÉDÉ ET DISPOSITIF DE RAPPORT ASSISTÉ PAR MACHINE DES ÉTATS D'ERREUR RELATIFS À DES COMPOSANTS D'UNE INSTALLATION DE TRANSPORT DES PERSONNES AINSI QUE D'INFORMATION ASSISTÉE PAR MACHINE D'UN DISPOSITIF DE SURVEILLANCE À L'AIDE DES ÉTATS D'ERREUR RAPPORTÉS

(30) Priorität: 28.03.2018 EP 18164486
(43) Veröffentlichungstag der Anmeldung: 17.02.2021
(73) Patentinhaber: INVENTIO AG, 6052 Hergiswil (CH)
(72) Erfinder: MEIERHANS, Daniel, 5643 Sins (CH); OSMANBASIC, Faruk, 5643 Sins (CH)
(74) Vertreter: Inventio AG
(86) Internationale Anmeldenummer: PCT/EP2019/057488
(87) Internationale Veröffentlichungsnummer: WO 2019/185571

(56) Entgegenhaltungen:
- WO-A1-2016/174486
- WO-A1-2017/037240
- WO-A2-2015/158662
- JP-A- 2007 137 657
- JP-A- 2007 153 581
- US-A1- 2017 197 805

## Beschreibung

Die vorliegende Erfindung betrifft ein Verfahren und eine Vorrichtung zum maschinenunterstützten Rapportieren von Fehlerzuständen betreffend Komponenten einer Personentransportanlage. Die Erfindung betrifft ferner ein Verfahren und eine Vorrichtung zum maschinenunterstützten Informieren einer Überwachungseinrichtung über rapportierte Fehlerzustände betreffend Komponenten einer Personentransportanlage. Weiterhin betrifft die Erfindung ein entsprechendes Computerprogrammprodukt sowie ein computerlesbares Medium mit einem solchen darauf gespeicherten Computerprogrammprodukt.

Personentransportanlagen wie zum Beispiel Aufzüge, Fahrtreppen oder Fahrsteige dienen dazu, Personen in Bauwerken zu transportieren. Hierbei müssen die Personentransportanlagen hohen Anforderungen hinsichtlich ihrer Sicherheit und Zuverlässigkeit entsprechen. Daher muss bereits bei einer Installation einer Personentransportanlage gewährleistet sein, dass diese korrekt entsprechenden Sollvorgaben folgend montiert wird. Auch während eines Betriebs der Personentransportanlage muss beispielsweise mittels Überwachungs- und Wartungsmaßnahmen gewährleistet werden, dass Vorgaben betreffend die Sicherheit und Zuverlässigkeit eingehalten werden.

EP 1 628 899 B1 beschreibt ein Verfahren und eine Vorrichtung zur Wartung einer Aufzugs- oder Fahrtreppenanlage.

JP2007153581A bietet ein System für Wartungsinspektionsmanagement, um Wartungsinspektionsarbeiten an einem Standort von Aufzügen besser durchzuführen. Dabei sind verschiedene Wartungskontrollpunkte mit QR-Codes versehen, die Informationen zur Spezifizierung der einzelnen Wartungskontrollpunkte enthalten. Wenn ein vom Wartungspersonal gehaltene Informationssender einen QR-Code liest, bestimmt ein Überwachungszentrum den Wartungsinspektionsort und sendet diesem Standort entsprechende Wartungsinspektionsinformationen an den Informationssender. Dadurch kann das Wartungspersonal Wartungs- und Inspektionsarbeiten an jeder Station schnell durchführen.

WO2017037240A1 offenbart ein Verfahren zur Wartung einer Transporteinrichtung. Das Verfahren umfasst: Empfangen von Bilddaten einer Komponente der Einrichtung, wobei die Bilddaten mit einer auf die Komponente gerichteten Kamera einer mobilen Vorrichtung erzeugt werden; Identifizieren des Bauteils durch Auswertung der Bilddaten; Abrufen von Wartungsdaten, die der identifizierten Komponente zugeordnet sind, aus einer zentralen Wartungsdatenbank; und Anzeigen der Wartungsdaten in der mobilen Vorrichtung.

Personentransportanlagen bestehen generell aus einer Vielzahl verschiedener Komponenten. Beispielsweise kann eine Aufzuganlage unter anderem eine Kabine und ein Gegengewicht, die an Tragmitteln aufgehängt sind und die entlang von Führungsschienen in einem Aufzugschacht geführt werden, aufweisen, wobei eine Bewegung der Kabine und des Gegengewichts von einer Antriebseinheit bewirkt wird und von einer Steuereinheit gesteuert wird. Sensorkomponenten können dazu dienen, innerhalb der Aufzuganlage vorherrschende Bedingungen zu detektieren, um beispielsweise den Betrieb der Aufzuganlage daran anzupassen. Sicherheitskomponenten können verteilt über die Aufzuganlage vorgesehen sein, um deren sicheren Betrieb zu überwachen. Alle diese verschiedenen Komponenten können Funktionsstörungen aufweisen, beispielsweise aufgrund von Verschleiß oder Defekten.

Bereits bei der Installation einer Personentransportanlage muss daher darauf geachtet werden, dass alle Komponenten korrekt ausgewählt sind, korrekt funktionieren und korrekt installiert werden. Auch im Rahmen späterer Überwachungsmaßnahmen, Wartungen und gegebenenfalls beim Ersatz von Komponenten muss darauf geachtet werden, dass die eingesetzten Komponenten geforderte Eigenschaften aufweisen.

Bisher musste ein Techniker, der eine Personentransportanlage installiert oder gewartet hat, die dabei eingesetzten Komponenten selbstständig auf die Einhaltung geforderter Eigenschaften hin überprüfen. Für den Fall, dass die geforderten Eigenschaften nicht vorlagen, musste der Techniker selbständig nach einer Lösung suchen, um die Personentransportanlage fertig installieren bzw. warten zu können. Hierzu musste der Techniker gegebenenfalls Eigenschaften einer einzusetzenden Komponente mühselig anhand von beispielsweise Betriebsanleitungen oder sonstigen Dokumentationen herausfinden, um die Komponente dann geeignet modifizieren zu können und somit einsatzfähig zu machen.

Da gleich oder ähnlich ausgestaltete Personentransportanlagen und deren Komponenten vielfach verbaut werden, war es außerdem wünschenswert, dass der Techniker, wenn er bei einer einzusetzenden Komponente beispielsweise eine nicht erwünschte Eigenschaft oder einen Defekt feststellte, hierüber einen Bericht verfasste. Mit anderen Worten sollte der Techniker nicht nur feststellen, dass eine Komponente nicht wie gewünscht funktionsfähig war und diese dann gegebenenfalls reparieren oder ersetzen, sondern er sollte auch als Rapporteur einen Bericht erstellen.

Anhand solcher Berichte sollte beispielsweise eine Entwicklungsabteilung bei einem Hersteller der Personentransportanlage in die Lage versetzt werden, systembedingte und somit häufig auftretende Fehlerzustände bzw. Fehlerquellen bei der Personentransportanlage erkennen und möglichst ausräumen zu können.

Allerdings wurde in der Praxis beobachtet, dass von Technikern erstellte Berichte über Fehlerzustände oft nicht oder nicht in geeigneter Weise erstellt wurden. Ferner hat sich herausgestellt, dass erstellte Berichte häufig schwierig auszuwerten waren.

Es kann daher ein Bedarf daran bestehen, Fehlerzustände betreffend Komponenten einer Personentransportanlage zuverlässiger erkennen und in einer Weise rapportieren zu können, dass hieraus nützliche Informationen bezüglich der rapportierten Fehlerzustände in den Komponenten abgeleitet werden können.

Einem solchen Bedarf kann durch die Verfahren bzw. die Vorrichtungen sowie ein Computerprogrammprodukt und ein damit versehenes computerlesbares Medium gemäß einem der unabhängigen Ansprüche entsprochen werden. Vorteilhafte Ausführungsformen sind in den abhängigen Ansprüchen sowie der Beschreibung definiert.

Gemäß einem ersten Aspekt der Erfindung wird Verfahren zum maschinenunterstützten Rapportieren von Fehlerzuständen betreffend Komponenten einer Personentransportanlage vorgeschlagen. Das Verfahren wird nachfolgend teilweise auch als "Rapportierverfahren" bezeichnet. Das Verfahren umfasst dabei zumindest die folgenden Verfahrensschritte, vorzugsweise in der angegebenen Reihenfolge:
- mittels einer Rapportiereinrichtung durchgeführtes Erfassen einer Identitätsinformation und/oder einer Fehlerinformation, wobei die Identitätsinformation eine Identität einer untersuchten Komponente wiedergibt und wobei die Fehlerinformation einen Fehlerzustand in der untersuchten Komponente wiedergibt;
- automatisches Übermitteln der Identitätsinformation und/oder der Fehlerinformation in einem ersten Datenübermittlungsvorgang an eine Analyseeinrichtung;
- automatisches Auswählen einer Auswahl von Fehlerursachemöglichkeiten aus einer in der Analyseeinrichtung abgelegten Liste von Fehlerursachemöglichkeiten basierend auf der Identitätsinformation und/oder der Fehlerinformation und Übermitteln einer Auswahlinformation, welche die Auswahl von Fehlerursachemöglichkeiten wiedergibt, an die Rapportiereinrichtung in einem zweiten Datenübermittlungsvorgang;
- automatisches Ausgeben der Auswahlinformation von Fehlerursachemöglichkeiten durch die Rapportiereinrichtung und Aufnehmen einer Unterauswahlinformation, welche eine durch einen Rapporteur ausgewählten Unterauswahl aus der Auswahl von Fehlerursachemöglichkeiten wiedergibt; und
- automatisches Übermitteln der Unterauswahlinformation an die Analyseeinrichtung in einem dritten Datenübermittlungsvorgang.

Gemäß einem zweiten Aspekt der Erfindung wird ein Verfahren zum maschinenunterstützten Informieren einer Überwachungseinrichtung über rapportierte Fehlerzustände betreffend Komponenten einer Personentransportanlage vorgeschlagen. Das Verfahren wird nachfolgend teilweise auch als "Informierverfahren" bezeichnet. Das Verfahren umfasst dabei zumindest die folgenden Schritte, vorzugsweise in der angegebenen Reihenfolge:
- Sammeln von Fehlerursachemöglichkeiten zu rapportierten Fehlerzuständen, umfassend ein mehrfaches Durchführen folgender Verfahrensschritte:
   - Empfangen von Identitätsinformationen und/oder Fehlerinformationen in einer Analyseeinrichtung, wobei die Identitätsinformationen mittels einer Rapportiereinrichtung erfasst wurden und eine Identität einer untersuchten Komponente wiedergeben und wobei die Fehlerinformationen mittels der Rapportiereinrichtung erfasst wurden und einen Fehlerzustand in der untersuchten Komponente wiedergeben;
   - automatisches Auswählen einer Auswahl von Fehlerursachemöglichkeiten aus einer in der Analyseeinrichtung abgelegten Liste von Fehlerursachemöglichkeiten basierend auf der Identitätsinformation und/oder der Fehlerinformation und Übermitteln einer Auswahlinformation, welche die Auswahl von Fehlerursachemöglichkeiten wiedergibt, an die Rapportiereinrichtung;
   - Empfangen einer Unterauswahlinformation in der Analyseeinrichtung, wobei die Unterauswahlinformation eine durch einen Rapporteur ausgewählte Unterauswahl aus der Auswahl von Fehlerursachemöglichkeiten wiedergibt; und
- automatisches Informieren der Überwachungseinrichtung, sobald eine Häufigkeit, mit der eine Fehlerursachemöglichkeit spezifisch für einen bestimmten Komponententyp von der Analyseeinrichtung empfangen wurde, einen vorbestimmten Häufigkeitsgrenzwert übersteigt.

Gemäß einem dritten Aspekt der Erfindung wird eine Vorrichtung zum maschinenunterstützten Rapportieren von Fehlerzuständen betreffend Komponenten einer Personentransportanlage vorgeschlagen, wobei die Vorrichtung dazu konfiguriert ist, ein Verfahren gemäß einer Ausführungsform des ersten Aspekts der Erfindung durchzuführen oder zu steuern. Eine solche Vorrichtung wird hierin als Berichterstellungsvorrichtung bezeichnet.

Gemäß einem vierten Aspekt der Erfindung wird eine Vorrichtung zum maschinenunterstützten Auswerten von rapportierten Fehlerzuständen betreffend Komponenten einer Personentransportanlage sowie zum maschinenunterstützten Informieren einer Überwachungseinrichtung vorgeschlagen, wobei die Vorrichtung dazu konfiguriert ist, ein Verfahren gemäß einer Ausführungsform des zweiten Aspekts der Erfindung durchzuführen oder zu steuern. Eine solche Vorrichtung wird hierin als Auswertevorrichtung bezeichnet.

Gemäß einem fünften Aspekt der Erfindung wird ein Computerprogrammprodukt vorgeschlagen, welches computerlesbare Anweisungen aufweist, welche einen Prozessor dazu veranlassen, ein Verfahren gemäß dem ersten Aspekt oder dem zweiten Aspekt der Erfindung durchzuführen oder zu steuern.

Gemäß einem sechsten Aspekt der Erfindung wird ein computerlesbares Medium vorgeschlagen, welches ein darauf gespeichertes Computerprogrammprodukt gemäß dem fünften Aspekt der Erfindung aufweist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend ausgeführt, wurde das Rapportieren von erkannten Fehlerzuständen bei Komponenten einer Personentransportanlage bisher oft nicht oder ungeeignet durchgeführt. Selbst wenn ein Bericht erstellt wurde, erlaubte dieser dennoch in vielen Fällen nicht, aus den rapportierten Fehlerzuständen nützliche Informationen abzuleiten, um die Komponente oder deren Einsatz in der Personentransportanlage zukünftig besser zu gestalten.

Insbesondere wurde beobachtet, dass die Aufgabe, einen Bericht zu verfassen, für einen Techniker einen erheblichen Zusatzaufwand mit sich brachte und daher in manchen Fällen von dem Techniker ignoriert wurde. Außerdem wurde erkannt, dass Berichte von verschiedenen Technikern in sehr unterschiedlicher Weise formuliert wurden, selbst bei Vorliegen ähnlicher oder sogar gleicher Mängel bei einer Komponente. Erschwerend hinzu kam, dass Personentransportanlagen und deren Komponenten unter sehr unterschiedlichen Bedingungen installiert und betrieben werden, wobei zu deren Installation oder Wartung eingesetzte Techniker beispielsweise unterschiedlich qualifiziert sein können und unterschiedliche Sprachen sprechen können oder den Technikern unterschiedliche Werkzeuge oder Dokumentation zur Verfügung stehen können. Hinzu kommt, dass eine Auswertung der rapportierten Berichte sich als äußerst schwierig herausgestellt hat, da zum Beispiel Informationen, die nötig wären, um die Auswertung sinnvoll durchführen zu können, teilweise nicht mitrapportiert wurden. Letztendlich war es somit oft kaum möglich, aus den rapportierten Berichten Informationen abzuleiten, die es z. B. einem Hersteller der Personentransportanlage ermöglicht hätten, die Personentransportanlage oder damit in Verbindung stehende Produkte oder Dienstleistungen systematisch zu verbessern.

Ausführungsformen des hierin vorgeschlagenen Verfahrens bzw. der hierin vorgeschlagenen Vorrichtung gemäß dem ersten und dritten Aspekt der Erfindung sollen den Vorgang des Rapportierens einerseits vereinfachen und andererseits ermöglichen die erkannten Fehlerzustände in einer Weise zu rapportieren, dass anschließend deren Auswertung einfach und zielgerichtet durchgeführt werden kann. Zu diesem Zweck kann das Rapportieren unter Verwendung einer hierfür speziell konfigurierten Rapportiereinrichtung sowie einer speziell konfigurierten Analyseeinrichtung durchgeführt werden. Dabei kann einerseits das Rapportieren maschinenunterstützt durch die Rapportiereinrichtung erfolgen, andererseits können die hierbei rapportierten Fehlerzustände von der Analyseeinrichtung geeignet analysiert werden und daraufhin der Rapporteur beim Rapportieren unterstützt werden.

Ausführungsformen des hierin vorgeschlagenen Verfahrens bzw. der hierin vorgeschlagenen Vorrichtung gemäß dem zweiten und vierten Aspekt der Erfindung können dann dazu eingesetzt werden, die rapportierten Fehlerzustände in geeigneter Weise zu analysieren, um hieraus nützliche Informationen ableiten zu können. Hierzu kann beispielsweise die Analyseeinrichtung das vorgeschlagene Verfahren ausführen und dabei mögliche Fehlerursachen, die über viele Rapporte hin als ursächlich für bestimmte Fehlerzustände herausgefunden wurden, sammeln und beispielsweise anhand der Häufigkeit, mit der eine Fehlerursachemöglichkeit auftritt, automatisch eine Überwachungseinrichtung geeignet informieren. Aufgrund der in der Überwachungseinrichtung dann vorliegenden Informationen können beispielsweise Entwickler die fehlerbehaftete Komponente weiterentwickeln, um systematisch begründete Fehlerzustände zum Beispiel durch Struktur- oder Funktionsänderungen beheben zu können.

Nachfolgend werden zunächst mögliche Ausgestaltungen und Ausführungsformen des Verfahrens gemäß dem ersten Aspekt der Erfindung und der Berichterstellungsvorrichtung gemäß dem dritten Aspekt der Erfindung erläutert.

Um einen Bericht betreffend einen Fehlerzustand in einer Komponente der Personentransportanlage zu erstellen, kann sich ein Techniker der Funktionalitäten bedienen, die durch die Rapportiereinrichtung und die Analyseeinrichtung bereitgestellt werden. Diese Funktionalitäten sind in der Berichterstellungsvorrichtung implementiert, die somit eine Rapportiereinrichtung und eine Analyseeinrichtung als voneinander separate Einrichtungen umfassen kann. Die Rapportiereinrichtung und die Analyseeinrichtung können dabei jeweils über einen geeigneten Prozessor und gegebenenfalls Datenspeicher verfügen, um Daten verarbeiten und speichern zu können. Außerdem können beide Einrichtungen über geeignete Kommunikationseinrichtungen verfügen, um miteinander Informationen austauschen zu können.

Sobald der Techniker feststellt, dass eine Komponente der Personentransportanlage fehlerhaft ist und sich entschließt, diesbezüglich einen Bericht zu erstellen, kann er sich der Rapportiereinrichtung bedienen. Diese Rapportiereinrichtung ist speziell dafür eingerichtet, den Techniker beim Rapportieren des Fehlerszustands in einer Weise zu unterstützen, sodass der Techniker einerseits möglichst wenig Aufwand mit dem Erstellen des Berichts hat, andererseits der Bericht in einer Weise erstellt ist, die nachfolgend eine zweckdienliche Auswertung der darin enthaltenen Informationen erleichtert.

Die Rapportiereinrichtung kann ein portables Gerät sein, das von dem Techniker mit sich geführt werden kann. Die Rapportiereinrichtung kann sich dabei einer Hardware bedienen, welche speziell für diesen Zweck entwickelt wurde. Alternativ kann die Rapportiereinrichtung sich bestehender Hardware, beispielsweise in Form eines intelligenten portablen Geräts wie eines Smartphones oder eines Notepads, bedienen, wobei eine zu erreichende Funktionalität durch eine Programmierung mit einem geeigneten Computerprogrammprodukt, d.h. einer Software, erzielt werden kann.

Mithilfe der Rapportiereinrichtung kann der Techniker maschinenunterstützt die Identität der untersuchten, fehlerbehafteten Komponente einerseits ermitteln und andererseits eine entsprechende Identitätsinformation erfassen und als Signal weiterleiten.

Beispielsweise kann jeder in einer Personentransportanlage verbauten Komponente eine individuelle ID (Identifikationscode) zugeordnet sein. Komponenten, die zu einem bestimmten Komponententyp gehören, können gleiche IDs aufweisen, gegebenenfalls ergänzt durch eine Art Seriennummer.

Die ID einer Komponente kann an der Komponente in Form einer maschinenlesbaren Information vorgehalten sein, sodass sie von der Rapportiereinrichtung ausgelesen werden kann. () Dies ermöglicht, dass die Identität der untersuchten Komponente automatisiert und somit für den Techniker einfach festgestellt und weitergegeben werden kann. Vorzugsweise wird die Information in einer Weise vorgehalten, sodass sie kontaktlos, d.h. berührungsfrei, ausgelesen werden kann.

Beispielsweise kann die Identitätsinformation als optisch auslesbarer Code, d.h. zum Beispiel als Strichcode oder als QR-Code, vorgehalten werden, um dann mithilfe eines in der Rapportiereinrichtung integrierten Scanners ausgelesen werden zu können. () Solche optisch auslesbaren Codes können einerseits einfach und kostengünstig beispielsweise als Aufkleber an einer Komponente angebracht werden. Andererseits können sie einfach und zuverlässig mit einem optischen Scanner, beispielsweise in Form einer Kamera, ausgelesen werden.

Ergänzend oder alternativ kann der Techniker die Rapportiereinrichtung dazu einsetzen, eine Fehlerinformation, die einen Fehlerzustand der untersuchten Komponente wiedergibt bzw. mit diesem korreliert, zu erfassen.

Beispielsweise kann der Techniker mit einer in die Rapportiereinrichtung integrierten Kamera ein Bild eines fehlerhaften Bauteils der Komponente aufnehmen. Alternativ kann die Fehlerinformation von dem Techniker beispielsweise durch Eingeben einer kurzen Beschreibung, durch Auswählen eines zugehörigen Symbols oder Ähnliches erfasst werden.

Die auf diese Weise erfasste Identitätsinformation und/oder Fehlerinformation wird in dem ersten Datenübermittlungsvorgang an die Analyseeinrichtung übermittelt. Die Analyseeinrichtung kann hierbei entfernt zu der Rapportiereinrichtung angeordnet sein. Insbesondere kann die Analyseeinrichtung als separater Computer, Server oder in Form einer Datenwolke (Cloud) ausgebildet sein. Eine Informationsübermittlung zwischen der Rapportiereinrichtung und der Analyseeinrichtung kann drahtgebunden oder drahtlos erfolgen. Die Informationsübermittlung kann über ein Datennetzwerk wie beispielsweise das Internet erfolgen. Insbesondere können der Analyseeinrichtung Informationen von einer Vielzahl verschiedener Rapportiereinrichtungen übermittelt werden, sodass die Analyseeinrichtung mit der Zeit Informationen zu einer Vielzahl von rapportierten Fehlerzuständen und hiermit zusammenhängenden Fehlerursachemöglichkeiten sammeln kann.

Innerhalb der Analyseeinrichtung können die empfangene Identitätsinformation und/oder die empfangene Fehlerinformation dahingehend weiterverarbeitet werden, dass basierend auf diesen Informationen eine Auswahl von möglichen Fehlerursachen, welche ursächlich für den in der untersuchten Komponente beobachteten Fehlerzustand sein könnten, ermittelt wird. Hierzu kann in der Analyseeinrichtung beispielsweise in einer Datenbank eine Liste von Fehlerursachemöglichkeiten abgelegt sein. Aus dieser Liste können anhand der Identitätsinformation und/oder der Fehlerinformation diejenigen Fehlerursachemöglichkeiten ausgewählt werden, die mit gewisser Wahrscheinlichkeit den beobachtenden Fehlerzustand begründen.

Beispielsweise kann für jeden Komponententyp eine Mehrzahl von bereits bekannten Fehlerursachen in der Liste abgelegt sein. Bei Auftreten eines Fehlerszustands bei einer Komponente diesen Komponententyps können dann alle diese Fehlerursachemöglichkeiten für diesen Komponententyp ausgewählt werden. Ergänzend kann beispielsweise die Fehlerinformation herangezogen werden, um aus den Fehlerursachemöglichkeiten diejenigen herauszufiltern, die für einen bestimmten Fehlerzustand, wie er durch die Fehlerinformation angegeben wird, ursächlich sein können bzw. mit besonders hoher Wahrscheinlichkeit als ursächlich angenommen werden können.

Zusätzlich zu der Liste von Fehlerursachemöglichkeiten können in der Analyseeinrichtung auch zu jeder möglichen Fehlerursache ein oder mehrere Vorschläge für eine Behebung des zugehörigen Fehlerzustands abgelegt sein.

In einem zweiten Datenübermittlungsvorgang kann die Analyseeinrichtung dann die herausgefundene Information über die getroffene Auswahl von Fehlerursachemöglichkeiten, welche hierin als "Auswahlinformation" bezeichnet wird, sowie gegebenenfalls jeweils zugeordnete Vorschläge für die Behebung des Fehlerszustands, d.h. die Behebungsinformationen, an die Rapportiereinrichtung übermitteln.

Die Auswahlinformation und/oder die Behebungsinformationen können dabei vorzugsweise in einer von dem Rapporteur voreinstellbaren Sprache übermittelt werden. () In der Analyseeinrichtung können in der Liste von Fehlerursachemöglichkeiten dabei alle Fehlerursachemöglichkeiten übersetzt in verschiedene Sprachen abgelegt sein. Alternativ können bei Bedarf Übersetzungen von Fehlerursachemöglichkeiten erstellt werden, beispielsweise unter Verwendung von Übersetzungssoftware. Gleiches gilt für die Vorschläge für die Behebung der jeweiligen Fehlerzustände. Der Rapporteur kann somit seine Rapportiereinrichtung derart einstellen, dass ihm die Auswahl- und/oder Behebungsinformationen in einer für ihn verständlichen Sprache dargestellt werden. Hierdurch kann ein Risiko von Missverständnissen aufgrund mangelnder Fremdsprachefähigkeiten bei dem Techniker verringert werden.

Die Rapportiereinrichtung kann die Auswahlinformation, gegebenenfalls einschließlich der Behebungsinformationen, automatisiert in einer Weise ausgeben, dass diese von dem rapportierenden Techniker wahrgenommen werden können. Beispielsweise können die Auswahlinformation und/oder die Behebungsinformationen in Form von Text, Symbolen oder Ähnlichem auf einem Display der Rapportiereinrichtung dargestellt werden.

Der Techniker kann daraufhin aus der dargestellten Auswahlinformation diejenige Fehlerursachemöglichkeit auswählen, die aus seiner Sicht tatsächlich für den beobachteten Fehlerzustand ursächlich ist. Dabei kann der Techniker gegebenenfalls die mitgelieferten Behebungsinformationen nutzen, um zu versuchen, die untersuchte Komponente zu reparieren bzw. den Fehlerzustand zu beheben. Hierdurch kann der Techniker noch sicherer erkennen, welche der in der Auswahlinformation vorgeschlagenen Fehlerursachemöglichkeiten tatsächlich ursächlich für den Fehlerzustand ist und somit den Behebungsinformationen folgend behoben werden kann.

Der Techniker kann hieraufhin auf seiner Rapportiereinrichtung aus der ausgegebenen Auswahlinformation eine Unterauswahl treffen. Eine entsprechende Unterauswahlinformation kann dann automatisch an die Analyseeinrichtung im Rahmen eines dritten Datenübermittlungsvorgangs übermittelt werden.

Nach der Durchführung des vorgeschlagenen Rapportierverfahrens liegen in der Analyseeinrichtung somit sowohl die Identitätsinformation und/oder die Fehlerinformation, welche einen Rückschluss über die untersuchte Komponente und eventuell deren aktuellen Fehlerzustand zulassen, als auch die Unterauswahlinformation, welche einen Rückschluss über eine wahrscheinlichste Fehlerursachemöglichkeit für den beobachteten Fehlerzustand zulässt, vor. Diese Informationen sind dabei in einer standardisierten Weise von dem Techniker mittels seiner Rapportiereinrichtung erfasst und übermittelt worden und erlauben somit eine standardisierbare Auswertung derselben.

Gemäß einer Ausführungsform kann im ersten Übermittlungsvorgang ergänzend eine Einsatzortsinformation übermittelt werden, welche einen Einsatzort der untersuchten Komponente wiedergibt. () Mit anderen Worten kann die Rapportiereinrichtung zusätzlich zu der Identitätsinformation und/oder der Fehlerinformation eine Information an die Analyseeinrichtung übermitteln, die z.B. angibt, wo die Rapportiereinrichtung eingesetzt wird und damit wo die untersuchte Komponente verbaut wurde.

Die Einsatzortsinformation kann dabei beispielsweise fest in der Rapportiereinrichtung eingespeichert sein, sofern beispielsweise davon ausgegangen werden kann, dass eine Rapportiereinrichtung nur in einer bestimmten Region oder einem bestimmten Land verwendet wird. Alternativ kann die Einsatzortsinformation aus vor Ort erfassten Daten ermittelt werden, beispielsweise aus GPS-Informationen. Die Einsatzortsinformation kann dabei den Ort wiedergeben, an dem sich die Personentransportanlage befindet.

Die Einsatzortsinformation erlaubt beim späteren Auswerten der Identitätsinformation, Fehlerinformation und Unterauswahlinformation beispielsweise, auch zu berücksichtigen, an welchem Einsatzort die untersuchte Komponente verbaut wurde. Einflüsse auf die Komponente, welche letztendlich zu einem Fehlerzustand führen, können in vielen Fällen von dem Einsatzort abhängen. Beispielsweise können sich Umwelteinflüsse wie zum Beispiel klimatische Bedingungen und Belastungen, welche auf eine Komponente einwirken, von Einsatzort zu Einsatzort unterscheiden. Zum Beispiel können Umwelteinflüsse zu schnellerem Verschleiß bei einer Komponente führen. Auch Methoden, wie Komponenten in einer Personentransportanlage installiert werden, können sich von Einsatzort zu Einsatzort unterscheiden. Zum Beispiel können Techniker in manchen Ländern andere Werkzeuge einsetzen oder anders geschult sein als in anderen.

In einer spezielleren Ausgestaltung kann die Einsatzortsinformation den Einsatzort der Komponente auch genauer wiedergeben und somit angeben, an welcher Position sich die untersuchte Komponente innerhalb der Personentransportanlage befindet.

Falls beim Auswerten der Informationen erkannt wird, dass bestimmte Fehlerzustände und deren ausgewählte Fehlerursachemöglichkeiten nur oder überwiegend an bestimmten Einsatzorten auftreten, kann dies einen wertvollen Hinweis darauf liefern, wie die untersuchte Komponente modifiziert werden müsste, um die Fehlerzustände zukünftig vermeiden zu können.

Nachfolgend werden mögliche Ausgestaltungen und Ausführungsformen des Informierverfahrens gemäß dem zweiten Aspekt der Erfindung und der Auswertevorrichtung gemäß dem vierten Aspekt der Erfindung erläutert.

Während das zuvor beschriebene Verfahren zum maschinenunterstützten Rapportieren von Fehlerzuständen sich im Regelfall zweier separater Einrichtungen, nämlich der Rapportiereinrichtung und der Analyseeinrichtung, bedient und verschiedene Verfahrensschritte dabei auf jeweils einer der beiden Einrichtungen durchgeführt werden, läuft das Verfahren zum maschinenunterstützten Informieren einer Überwachungseinrichtung über rapportierte Fehlerzustände, wie es im zweiten Aspekt der Erfindung vorgeschlagen wird, im Regelfall ausschließlich in der Auswertevorrichtung ab. Die Auswertevorrichtung kann dabei gerätetechnisch oder hinsichtlich ihrer Funktionalitäten der zuvor beschriebenen Analyseeinrichtung entsprechen oder diese umfassen. Insbesondere kann die Auswertevorrichtung als einzelnes technisches Gerät, beispielsweise als einzelner Computer, oder als Netzwerk von Geräten, beispielsweise in Form einer Datenwolke, ausgebildet sein.

In einem ersten Schritt wird bei dem Informierverfahren zunächst eine Mehrzahl von Fehlerursachemöglichkeiten zu rapportierten Fehlerzuständen im Laufe der Zeit gesammelt. Mit anderen Worten kann das oben beschriebene Rapportierverfahren mehrfach, beispielsweise von verschiedenen Rapporteuren und bezüglich verschiedenen Personentransportanlagen, durchgeführt werden und dabei die Fehlerursachemöglichkeiten, die jeweils in der an die Analyseeinrichtung übermittelten Auswahlinformation angegeben sind, gesammelt werden.

Bei jeder Durchführung eines Rapportierverfahrens empfängt die Auswertevorrichtung bzw. deren Analyseeinrichtung jeweils Identitätsinformationen und/oder Fehlerinformationen betreffend die Identität bzw. den Fehlerzustand einer untersuchten Komponente. Unter Berücksichtigung dieser Identitätsinformationen und/oder Fehlerinformationen wählt die Analyseeinrichtung dann eine Auswahl von Fehlerursachemöglichkeiten automatisch aus und übermittelt diese als Auswahlinformation an die jeweilige Rapportiereinrichtung, von der die Identitätsinformationen bzw. Fehlerinformationen empfangen wurden. Als nächstes empfängt die Analyseeinrichtung von der Rapportiereinrichtung dann die von dem Rapporteur ausgewählte Unterauswahlinformation, welche eine Information über die wahrscheinlichste Fehlerursachemöglichkeit für einen beobachteten Fehlerzustand angibt.

Die Informationen zu den Fehlerursachemöglichkeiten sollen jedoch nicht nur in der Analyseeinrichtung gesammelt werden, sondern sie sollen auch dazu dienen, beispielsweise einen Hersteller von Personentransportanlagen in die Lage zu versetzen, systematisch auftretende Fehler bei Komponenten einer Personentransportanlage zu erkennen und die Komponente geeignet weiter entwickeln zu können.

Prinzipiell könnte jeder erstellte Rapport hierzu an eine Überwachungseinrichtung weitergeleitet werden, welche beispielsweise von dem Hersteller der Personentransportanlage betrieben wird. Allerdings wurde beobachtet, dass viele im Feldeinsatz auftretende Fehlerzustände nicht systematisch bedingt sind, sondern beispielsweise zufällig auftreten. Auch können Fehlerzustände allein dadurch bedingt auftreten, dass in einer Personentransportanlage versehentlich nicht die für diese geeignete Komponente eingesetzt wird. Ein unselektiertes Weiterleiten von Rapporten kann somit einen unzweckmäßigen Aufwand bei der Auswertung der Rapporte mit sich bringen.

Bei dem hier vorgeschlagenen Informierverfahren wird daher die Überwachungseinrichtung lediglich dann automatisch informiert, wenn eine Häufigkeit, mit der eine bestimmte Fehlerursache spezifisch für einen bestimmten Komponententyp besonders häufig auftritt und somit besonders häufig an die Analyseeinrichtung rapportiert wird.

Hierzu kann vorab für jeden Komponententyp und jede diesen Komponententyp betreffende Fehlerursachemöglichkeit ein Häufigkeitsgrenzwert festgelegt werden. Sobald eine Fehlerursachemöglichkeit für diesen Komponententyp häufiger als der Häufigkeitsgrenzwert berichtet wurde, informiert die Analyseeinrichtung automatisch die Überwachungseinrichtung. Aufgrund der Information an die Überwachungseinrichtung können Entwickler erkennen, dass bei dem betreffenden Komponententyp die Fehlerursachemöglichkeit systematisch aufzutreten scheint und Fehlerzustände bedingt. Daraufhin kann der Komponententyp geeignet modifiziert werden.

Der Häufigkeitsgrenzwert kann unter Berücksichtigung von physikalischen Eigenschaften und/oder Funktionalitäten des bestimmten Komponententyps vorbestimmt sein. () Mit anderen Worten kann die Art und Weise, wie ein Komponententyp aufgebaut ist, beim vor Bestimmen des Häufigkeitsgrenzwerts Einfluss finden. Auch eine Funktionalität, die mit dem Komponententyp implementiert werden soll, kann beim bestimmen des Häufigkeitsgrenzwerts berücksichtigt werden.

Wenn beispielsweise ein Komponententyp aufgrund seiner physikalischen Ausgestaltung bereits prädestiniert für einen gewissen Verschleiß ist und dies bei einer Konzeption der Personentransportanlage bereits berücksichtigt wurde, kann ein dies betreffender Häufigkeitsgrenzwert für damit im Zusammenhang stehende Fehlerzustände relativ hoch angesetzt werden. Wenn andererseits beispielsweise ein Komponententyp eine sicherheitsrelevante Funktionalität implementieren soll, kann der Häufigkeitsgrenzwert für Fehlerursachemöglichkeiten, die zu Fehlzuständen bei diesem Komponententyp führen, niedrig gewählt werden.

Der Häufigkeitsgrenzwert kann ferner unter Berücksichtigung einer Einsatzhäufigkeit des bestimmten Komponententyps vorbestimmt sein. () Anders ausgedrückt kann beim Festlegen eines Häufigkeitsgrenzwerts berücksichtigt werden, wie oft der betreffende Komponententyp tatsächlich in Personentransportanlagen eingesetzt wird. Für Komponententypen, die nur selten verbaut werden, kann ein niedrigerer Häufigkeitsgrenzwert vorbestimmt werden als für Komponententypen, die häufig verbaut werden und bei denen somit statistisch auch häufiger Fehlerzustände auftreten und rapportiert werden.

Gemäß einer Ausführungsform kann beim Sammeln von Fehlerursachemöglichkeiten ergänzend von der Analyseeinrichtung eine Einsatzortsinformation empfangen werden. Diese Einsatzortsinformation gibt einen Einsatzort der untersuchten Komponente wieder. Der Häufigkeitsgrenzwert kann in diesem Fall unter Berücksichtigung des Einsatzorts des bestimmten Komponententyps vorbestimmt sein. ()

Mit anderen Worten kann, wie bereits weiter oben angemerkt, der Einsatzort Einfluss darauf haben, wie häufig bei einem Komponententyp bestimmte Fehlerzustände auftreten. Die Information über den Einsatzort kann somit beim Informieren der Überwachungseinrichtung mit übertragen werden, um beispielsweise einem Entwickler Hinweise und Rückschlüsse darüber zu ermöglichen, durch welche Einsatzort-typischen Bedingungen eine beobachtete Fehlerursachemöglichkeit begründet sein könnte.

Indem die Information über den Einsatzort beim Vorbestimmen des Häufigkeitsgrenzwerts berücksichtigt wird, kann die Entscheidung der Analyseeinrichtung, ob die Überwachungseinrichtung informiert wird, davon abhängig gemacht werden, von welchem Einsatzort aus bestimmte Fehlerursachemöglichkeiten rapportiert werden. Dadurch kann berücksichtigt werden, dass eventuell bereits vorab bekannt ist, dass an bestimmten Einsatzorten gewisse Fehlerzustände gehäuft vorkommen, beispielsweise bedingt durch dort vorherrschende klimatische Bedingungen, und dies toleriert wird, während an anderen Einsatzorten ein gehäuftes Auftreten von Fehlerzuständen auf einen systematischen Konstruktionsfehler bei dem Komponententyp hindeuten könnte.

Gemäß einer Ausführungsform kann bei dem hier vorgeschlagenen Verfahren ferner vorgesehen sein, eine Information von der Analyseeinrichtung an die Rapportiereinrichtung zu übermitteln, sobald eine Möglichkeit zum Beheben einer Fehlerursachemöglichkeit gefunden wurde. () Die Fehlerursachemöglichkeit kann beispielsweise durch eine technische Weiterentwicklung des Komponententyps behoben worden sein. Diese Information kann über die Rapportiereinrichtung den Techniker erreichen, der zuvor den Fehlerzustand rapportiert hatte.

Hierdurch kann einerseits erreicht werden, dass der Techniker darüber informiert wird, dass es inzwischen gegebenenfalls weiterentwickelte Komponenten gibt, sodass zukünftig beispielsweise fehlerhafte Komponenten durch solche weiterentwickelten Komponenten ersetzt werden können.

Andererseits kann eine solche Informationsübermittlung zur Motivation bei den Technikern beitragen, Fehlerzustände zu rapportieren. Insbesondere wurde beobachtet, dass Techniker, denen vermittelt wird, dass von ihnen rapportierte Berichte tatsächlich zu einer Weiterentwicklung einer fehlerhaften Komponente führen, motivierter sind, den Aufwand des Erstellens eines Berichts auf sich zu nehmen.

Gegebenenfalls kann das Erstellen eines Berichts direkt oder nach dem aufgrund des Berichts eine Möglichkeit zum Beheben der rapportierten Fehlerursachemöglichkeit entwickelt wurde durch ein Zahlen eines Bonus weiter motiviert bzw. incentiviert werden. Hierzu kann in der Auswertevorrichtung bzw. in der Analyseeinrichtung darüber Buch geführt werden, wann und worüber ein Techniker einen Bericht erstellt hat und die dabei abgespeicherten Daten dann beim Berechnen von Boni berücksichtigt werden.

Ausführungsformen des hierin beschriebenen Rapportierverfahrens bzw. Informierverfahrens können auf programmierbaren Geräten mithilfe eines Computerprogrammprodukts implementiert werden. Das Computerprogrammprodukt kann dabei auf einem oder mehreren Prozessoren einer Berichterstellungsvorrichtung oder einer Auswertevorrichtung, insbesondere auf einem Prozessor einer Rapportiereinrichtung und/oder einem Prozessor einer Analyseeinrichtung, ausgeführt werden. Das Computerprogrammprodukt kann insbesondere verteilt über mehrere Komponenten einer Datenwolke (Cloud) ausgeführt werden. Das Computerprogrammprodukt kann in einer beliebigen Computersprache programmiert sein.

Das Computerprogrammprodukt kann auf einem beliebigen computerlesbaren Medium gespeichert sein. Beispielsweise kann das Computerprogrammprodukt auf einer CD, einer DVD, einem Flash-Speicher, etc. gespeichert sein. Das Computerprogrammprodukt kann auch auf einzelnen Rechnern oder einem Netzwerk von Rechnern gespeichert sein und von dort aus heruntergeladen werden, beispielsweise über das Internet.

Es wird darauf hingewiesen, dass einige der möglichen Merkmale und Vorteile der Erfindung hierin mit Bezug auf unterschiedliche Ausführungsformen der hierin vorgestellten Verfahren einerseits und der hierfür einsetzbaren Vorrichtungen andererseits beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen von Aspekten der Erfindung unter Bezugnahme auf die beigefügte Zeichnung beschrieben, wobei weder die Zeichnung noch die Beschreibung als die Erfindung einschränkend auszulegen sind.

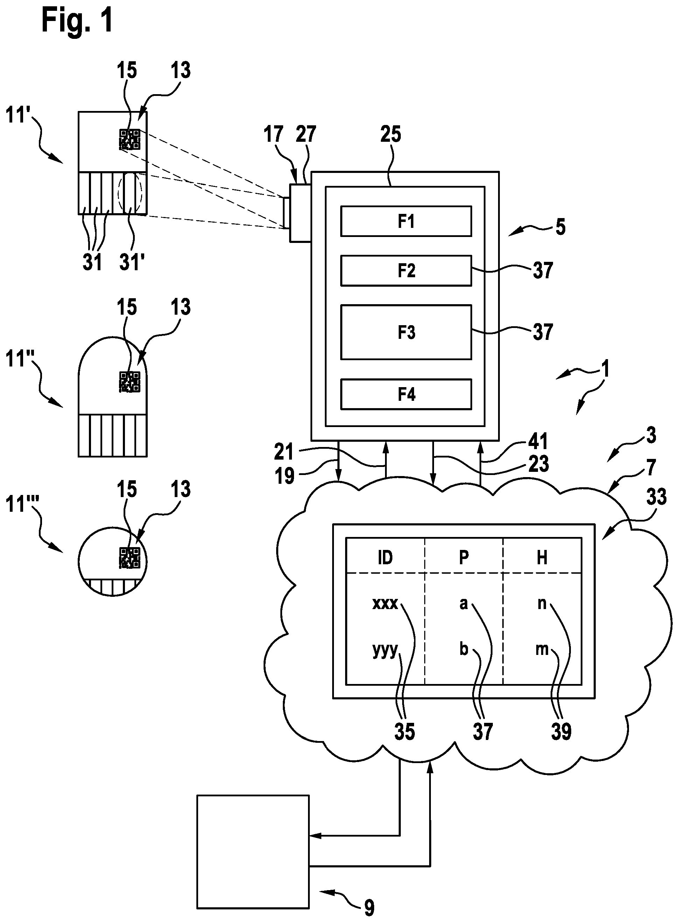

Fig. 1 zeigt eine Anordnung von Vorrichtungen, mithilfe derer die hierin vorgeschlagenen Verfahren implementiert werden können, gemäß einer Ausführungsform der vorliegenden Erfindung.

Die Figur ist lediglich schematisch und nicht maßstabsgetreu. Gleiche Bezugszeichen bezeichnen gleiche oder gleichwirkende Merkmale

Fig. 1 zeigt eine Berichterstellungsvorrichtung 1, mithilfe derer gemäß einer Ausführungsform der vorliegenden Erfindung Fehlerzustände betreffend verschiedene Komponenten 11', 11", 11‴ einer Personentransportanlage maschinenunterstützt rapportiert werden können. Die Berichterstellungsvorrichtung 1 umfasst wenigstens eine Rapportiereinrichtung 5 sowie eine Analyseeinrichtung 7. Die Analyseeinrichtung 7 kann gleichzeitig als Teil einer Auswertevorrichtung 3 angesehen werden, mithilfe derer Berichte, die mittels der Berichterstellungsvorrichtung 1 rapportiert wurden, ausgewertet werden können und gegebenenfalls eine Überwachungseinrichtung 9 geeignet automatisiert über ein gehäuftes Auftreten von rapportierten Fehlerzuständen informiert werden kann.

Die Rapportiereinrichtung 5 verfügt über einen Scanner 17 beispielsweise in Form einer Kamera 27. Mithilfe dieses Scanners 17 kann ein Techniker, wenn er bei einer Komponente 11 einer Personentransportanlage einen Fehlerzustand erkennt, eine an der Komponente 11 vorgehaltene maschinenlesbare Information 13, beispielsweise in Form eines QR-Codes 15, einlesen. Die maschinenlesbare Information 13 kann eine Identitätsinformation umfassen, welche beispielsweise Angaben über den Komponententyp der untersuchten Komponente, dessen spezifische Eigenschaften, eine Seriennummer, einen Einsatzort und/oder weitere Informationen beinhalten kann.

Ergänzend oder alternativ kann der Techniker auch eine Fehlerinformation aufnehmen, welche Rückschlüsse über den Fehlerzustand bei der untersuchten Komponente 11 ermöglicht. Hierzu kann der Techniker beispielsweise mit der Kamera 27 der Rapportiereinrichtung 5 ein Bild von fehlerhaften Bauteilen 31 der Komponente 11 aufnehmen.

Die von der Rapportiereinrichtung 5 erfasste Identitätsinformation und/oder Fehlerinformation wird dann automatisiert in einem ersten Datenübermittlungsvorgang 19 an die Analyseeinrichtung 7 übermittelt. Die Analyseeinrichtung 7 beziehungsweise die damit implementierte Auswertevorrichtung 3 kann dabei in Form von mehreren Rechnern, die zusammen eine Datenwolke bilden, ausgebildet sein. Alternativ kann die Analyseeinrichtung 7 von einem zentralen Rechner gebildet sein. Die Analyseeinrichtung 7 bzw. die Auswertevorrichtung 3 kann mit einer Vielzahl verschiedener Rapportiereinrichtungen 5 in Verbindung stehen und von diesen Informationen empfangen.

In der Analyseeinrichtung 7 ist eine Liste 33 von Fehlerursachemöglichkeiten 37 abgelegt. Zu jeder Identitätsinformation (ID) 35, d.h. für jeden Komponententyp, können dabei auftretende Probleme (P) und hierfür ursächliche Fehlerursachemöglichkeiten 37 aufgelistet sein. Eventuell können in der Liste 33 auch Behebungsmöglichkeiten aufgelistet sein. Für jede Fehlerursachemöglichkeit 37 wird dabei mitprotokolliert, mit welcher Häufigkeit (H) 39 diese auftritt.

In der Analyseeinrichtung 7 wird unter Verwendung der Liste 33 automatisch eine Auswahl von Fehlerursachemöglichkeiten basierend auf den empfangenen Identitätsinformationen und/oder Fehlerinformationen ausgewählt und dann in Form einer Auswahlinformation im Rahmen eines zweiten Datenübermittlungsvorgang 21 zurück an die Rapportiereinrichtung 5 übermittelt.

Die Auswahlinformation stellt somit eine Auswahl von möglichen Fehlerursachen F1, F2, F3, F4, etc. dar, welche ursächlich für den beobachteten Fehlerzustand sein könnten. Beispielsweise kann als Fehlerursache F1 angenommen werden, dass zum Installieren einer Personentransportanlage eine Komponente falsch geliefert wurde, als Fehlerursache F2 kann angenommen werden, dass eine Komponente falsche Abmessungen aufweist, als Fehlerursache F3 kann angenommen werden, dass die Komponente falsche funktionale Eigenschaften aufweist, etc. Die Fehlerursachen F1, F2, F3, F4 können beispielsweise über ein Display 25 der Rapportiereinrichtung 5 ausgegeben werden, sodass ein Techniker sie einfach visuell wahrnehmen kann.

Der rapportierende Techniker kann daraufhin aus der dargestellten Auswahlinformation eine Unterauswahl treffen. Dabei kann der Techniker beispielsweise diejenige Fehlerursache F1, F2, F3, F4 auswählen, die seiner Ansicht nach im vorliegenden Fall tatsächlich oder mit überwiegender Wahrscheinlichkeit ursächlich für den beobachteten Fehlerzustand ist.

Die entsprechende Unterauswahlinformation wird dann automatisiert von der Rapportiereinrichtung 5 an die Analyseeinrichtung 7 im Rahmen eines dritten Datenübermittlungsvorgangs 23 übermittelt.

Mit der Zeit kann die Analyseeinrichtung 7 bzw. die Auswertevorrichtung 3 somit eine Vielzahl von Berichten von unterschiedlichen Rapportiereinrichtungen 5 erhalten und die darin genannten Fehlerursachemöglichkeiten zu rapportierten Fehlerzuständen sammeln.

Sobald die Häufigkeit 39, mit der eine bestimmte Fehlerursachemöglichkeit 37 spezifisch für einen bestimmten Komponententyp an die Auswertevorrichtung 3 berichtet wurde, einen vorbestimmten Häufigkeitsgrenzwert übersteigt, kann die Auswertevorrichtung 3 dann die Überwachungseinrichtung 9 hierüber geeignet informieren.

Entwickler können dann versuchen, den entsprechenden Komponententyp weiterzuentwickeln, um zukünftig das Auftreten des beobachteten Fehlerzustands zu vermeiden.

Sofern dies gelingt, kann eine entsprechende Information an die Analyseeinrichtung 7 übermittelt werden und diese kann die Information weiter an alle mit ihr korrespondierenden Rapportiereinrichtungen 5 oder zumindest an diejenigen Rapportiereinrichtungen 5, die zuvor einen entsprechenden Fehlerzustand rapportiert hatten, im Rahmen eines vierten Datenübermittlungsvorgangs 41 übermitteln.

Insgesamt kann der hierin vorgestellte Ansatz es ermöglichen, Berichte betreffend Fehlerzustände bei Komponenten einer Personentransportanlage von einem Techniker einfacher erstellen zu lassen, da der Techniker hierbei weitgehend von der Berichterstellungsvorrichtung 1 automatisiert unterstützt wird. Außerdem können die Berichte in einer standardisierten Weise erstellt werden, sodass die Auswertevorrichtung 3 hieraus in einfacher Weise Informationen extrahieren kann, welche eine zielgerichtete Weiterentwicklung von Komponenten 11 ermöglichen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### Bezugszeichenliste

- 1: Berichterstellungsvorrichtung
- 3: Auswertevorrichtung
- 5: Rapportiereinrichtung
- 7: Analyseeinrichtung
- 9: Überwachungseinrichtung
- 11: Komponenten der Personentransportanlage
- 13: maschinenlesbare Information
- 15: QR-Code
- 17: Scanner
- 19: erster Datenübermittlungsvorgang
- 21: zweiter Datenübermittlungsvorgang
- 23: dritter Datenübermittlungsvorgang
- 25: Display
- 27: Kamera
- 31: Bauteile einer Komponente
- 33: Liste von Fehlerursachemöglichkeiten
- 35: Identitätsinformation
- 37: Fehlerursachemöglichkeit
- 39: Häufigkeit
- 41: vierter Datenübermittlungsvorgang

## Patentansprüche

1. Verfahren zum maschinenunterstützten Rapportieren von Fehlerzuständen betreffend Komponenten (11) einer Personentransportanlage, wobei das Verfahren umfasst:
- mittels einer Rapportiereinrichtung (5) durchgeführtes Erfassen einer Identitätsinformation (35) und/oder einer Fehlerinformation, wobei die Identitätsinformation (35) eine Identität einer untersuchten Komponente (11) wiedergibt und wobei die Fehlerinformation einen Fehlerzustand in der untersuchten Komponente (11) wiedergibt; wobei das Verfahren **dadurch gekennzeichnet ist, dass**
- automatisches Übermitteln der Identitätsinformation (35) und/oder der Fehlerinformation in einem ersten Datenübermittlungsvorgang (19) an eine Analyseeinrichtung (7);
- automatisches Auswählen einer Auswahl von Fehlerursachemöglichkeiten (37) aus einer in der Analyseeinrichtung (7) abgelegten Liste (33) von Fehlerursachemöglichkeiten (37) basierend auf der Identitätsinformation (35) und/oder der Fehlerinformation und Übermitteln einer Auswahlinformation, welche die Auswahl von Fehlerursachemöglichkeiten (37) wiedergibt, an die Rapportiereinrichtung (5) in einem zweiten Datenübermittlungsvorgang (21);
- automatisches Ausgeben der Auswahlinformation von Fehlerursachemöglichkeiten (37) durch die Rapportiereinrichtung (5) und Aufnehmen einer Unterauswahlinformation, welche eine durch einen Rapporteur ausgewählten Unterauswahl aus der Auswahl von Fehlerursachemöglichkeiten (37) wiedergibt;
- automatisches Übermitteln der Unterauswahlinformation an die Analyseeinrichtung (7) in einem dritten Datenübermittlungsvorgang (23).

2. Verfahren nach Anspruch 1, wobei Identitätsinformation (35) durch Auslesen einer maschinenlesbaren Information (13), welche an der untersuchten Komponente (11) vorgehalten wird, erfasst wird.

3. Verfahren nach Anspruch 2, wobei die Identitätsinformation (35) als optisch auslesbarer Code (15) an der untersuchten Komponente vorgehalten wird und mittels eines in der Rapportiereinrichtung (5) integrierten Scanners (17) ausgelesen wird.

4. Verfahren nach einem der vorangehenden Ansprüche, wobei die Auswahlinformation an die Rapportiereinrichtung (5) in einer von dem Rapporteur voreinstellbaren Sprache übermittelt wird.

5. Verfahren nach einem der vorangehenden Ansprüche, wobei in dem ersten Übermittlungsvorgang (19) ergänzend eine Einsatzortsinformation übermittelt wird, wobei die Einsatzortsinformation einen Einsatzort der untersuchten Komponente (11) wiedergibt.

6. Verfahren nach Anspruch 1, bei dem die Fehlerursachemöglichkeiten (37) zu rapportierten Fehlerzuständen durch ein mehrfaches Durchführen der Verfahrensschritte gemäß Anspruch 1 gesammelt werden, und
wobei eine Überwachungseinrichtung (9) über die gesammelten Fehlerursachemöglichkeiten (37) automatisch informiert wird, sobald eine Häufigkeit, mit der eine Fehlerursachemöglichkeit (37) spezifisch für einen bestimmten Komponententyp von der Analyseeinrichtung (7) empfangen wurde, einen vorbestimmten Häufigkeitsgrenzwert übersteigt.

7. Verfahren nach Anspruch 6, wobei der Häufigkeitsgrenzwert unter Berücksichtigung von physikalischen Eigenschaften und/oder Funktionalitäten des bestimmten Komponententyps vorbestimmt ist.

8. Verfahren nach einem der Ansprüche 6 und 7, wobei der Häufigkeitsgrenzwert unter Berücksichtigung einer Einsatzhäufigkeit des bestimmten Komponententyps vorbestimmt ist.

9. Verfahren nach einem der Ansprüche 6 bis 8, wobei bei dem Sammeln von Fehlerursachemöglichkeiten (37) ergänzend eine Einsatzortsinformation empfangen wird, wobei die Einsatzortsinformation einen Einsatzort der untersuchten Komponente (11) wiedergibt, und wobei der Häufigkeitsgrenzwert unter Berücksichtigung des Einsatzorts des bestimmten Komponententyps vorbestimmt ist.

10. Verfahren nach einem der Ansprüche 6 bis 9, wobei, sobald eine Möglichkeit zum Beheben einer Fehlerursachemöglichkeit gefunden wurde, eine dies betreffende Information von der Analyseeinrichtung (7) an die Rapportiereinrichtung (5) übermittelt wird.

11. Berichterstellungsvorrichtung (1) zum maschinenunterstützten Rapportieren von Fehlerzuständen betreffend Komponenten (11) einer Personentransportanlage, **dadurch gekennzeichnet ist, dass** die Berichterstellungsvorrichtung (1) dazu konfiguriert ist, ein Verfahren gemäß einem der Ansprüche 1 bis 6 durchzuführen oder zu steuern.

12. Berichterstellungsvorrichtung (1) nach Anspruch 11, wobei die Berichterstellungsvorrichtung (1) mit einer Auswertevorrichtung (3) verbindbar ist, wodurch die Auswertevorrichtung (3) Informationen von der Berichterstellungsvorrichtung (1) empfangen kann, und wobei die Auswertevorrichtung (3) zum maschinenunterstützten Auswerten von rapportierten Fehlerzuständen betreffend Komponenten (11) einer Personentransportanlage sowie zum maschinenunterstützten Informieren einer Überwachungseinrichtung (9) vorgesehen und dazu konfiguriert ist, ein Verfahren gemäß einem der Ansprüche 7 bis 10 durchzuführen oder zu steuern.

13. Computerprogrammprodukt, aufweisend computerlesbare Anweisungen, welche einen Prozessor dazu veranlassen, ein Verfahren gemäß einem der Ansprüche 1 bis 10 durchzuführen oder zu steuern.

14. Computerlesbares Medium, aufweisend ein darauf gespeichertes Computerprogrammprodukt gemäß Anspruch 13.

## Claims

1. A method for reporting fault states relating to components (11) of a passenger transport system in a machine-supported manner, with said method comprising the steps of:
- acquiring identity information (35) and/or fault information by means of a reporting device (5), wherein the identity information (35) describes an identity of a component (11) being examined, and wherein the fault information describes a fault state in a component (11) being examined; wherein the method is **characterized in that**
- automatically transmitting the identity information (35) and/or the fault information to an analysis device (7) in a first data transmission process (19);
- automatically selecting a selection of possible causes (37) of the fault from a list (33) of possible causes (37) of faults stored in the analysis device (7) based on the identity information (35) and/or the fault information and transmitting corresponding selection information, which describes the selection of possible causes (37) of the fault, to the reporting device (5) in a second data transmission process (21);
- automatically outputting the selection information on possible causes (37) of the fault by means of the reporting device (5) and receiving sub-selection information, which describes a sub-selection selected by a reporter from the selection of possible causes (37) of the fault; and
- automatically transmitting the sub-selection information to the analysis device (7) in a third data transmission process (23).

2. The method according to claim 1, wherein the identity information (35) is acquired by reading out machine-readable information (13) stored on the component (11) being examined.

3. The method according to claim 2, wherein the identity information (35) is stored on the component being examined in the form of an optically readable code (15) and read out by means of a scanner (17) integrated into the reporting device (5).

4. The method according to one of the preceding claims, wherein the selection information is transmitted to the reporting device (5) in a language that can be preset by the reporter.

5. The method according to one of the preceding claims, wherein usage site information is additionally transmitted in the first transmission process (19), and wherein the usage site information describes a usage site of the component (11) being examined.

6. The method according to claim 1, in which the possible causes (37) of faults for reported fault states are collected by carrying out the steps according to claim 1 multiple times, and
wherein a monitoring device (9) is automatically informed on the collected possible causes (37) of faults as soon as a frequency, with which a possible cause (37) of a fault was received by the analysis device (7) specifically for a certain component type, exceeds a predefined frequency threshold value.

7. The method according to claim 6, wherein the frequency threshold value is predefined with consideration of physical properties and/or functionalities of the certain component type.

8. The method according to one of claims 6 and 7, wherein the frequency threshold value is predefined with consideration of the frequency of use of the certain component type.

9. The method according to one of claims 6 to 8, wherein usage site information is additionally received when possible causes (37) of faults are collected, wherein the usage site information describes a usage site of the component (11) being examined, and wherein the frequency threshold value is predefined with consideration of the usage site of the certain component type.

10. The method according to one of claims 6 to 9, wherein corresponding information is transmitted from the analysis device (7) to the reporting device (5) as soon as an option for correcting a possible cause of a fault has been found.

11. A report generating device (1) for reporting fault states relating to components (11) of a passenger transport system in a machine-supported manner, **characterized in that**, the report generating device (1) is configured for carrying out or for controlling a method according to one of claims 1 to 6.

12. The report generating device (1) according to claim 11, wherein the report generating device (1) can be connected to the evaluating device (3) such that the evaluating device (3) can receive information from the report generating device (1), and wherein the evaluating device (3) is provided for evaluating reported fault states relating to components (11) of a passenger transport system in a machine-supported manner, as well as for informing a monitoring device (9) in a machine-supported manner, and configured for carrying out or for controlling a method according to one of claims 7 to 10.

13. A computer program product comprising machine-readable instructions that prompt a processor to carry out or to control the method according to one of claims 1 to 10.

14. A machine-readable medium with a computer program product according to claim 13 stored thereon.

## Revendications

1. Procédé de signalement assisté par ordinateur d'états d'erreur concernant des composants (11) d'une installation de transport de personnes, le procédé comprenant :
- la saisie, au moyen d'un dispositif de rapport (5), d'informations d'identité (35) et/ou d'informations d'erreur, les informations d'identité (35) reflétant l'identité d'un composant examiné (11) et les informations d'erreur reflétant un état d'erreur dans le composant examiné (11) ; le procédé étant **caractérisé en ce que**
- la transmission automatique des informations d'identité (35) et/ou des informations de défaut, dans une première opération de transmission de données (19), à un dispositif d'analyse (7) ;
- la sélection automatique d'une sélection de causes possibles de défaut (37) à partir d'une liste (33) de causes possibles de défaut (37) stockée dans le dispositif d'analyse (7) sur la base des informations d'identité (35) et/ou des informations d'erreur, et la transmission d'informations de sélection, qui reflètent la sélection de causes d'erreur possibles (37), au dispositif de rapport (5) lors d'une deuxième opération de transmission de données (21) ;
- la sortie automatique des informations de sélection des causes possibles de défauts (37) par le dispositif de rapport (5) et l'enregistrement d'informations de sous-sélection reflétant une sous-sélection, choisie par un rapporteur, parmi la sélection de causes possibles de défauts (37) ;
- transmission automatique des informations de sous-sélection au dispositif d'analyse (7) lors d'une troisième opération de transmission de données (23).

2. Procédé selon la revendication 1, dans lequel des informations d'identité (35) sont saisies par lecture d'informations lisibles par machine (13) qui sont conservées sur le composant examiné (11).

3. Procédé selon la revendication 2, dans lequel les informations d'identité (35) sont conservées sur le composant examiné (11) sous la forme d'un code lisible optiquement (15) et sont lues à l'aide d'un scanner (17) intégré dans le dispositif de rapport (5).

4. Procédé selon l'une des revendications précédentes, dans lequel les informations de sélection sont transmises au dispositif de rapport (5) dans une langue pouvant être préréglée par le rapporteur.

5. Procédé selon l'une des revendications précédentes, dans lequel une information de lieu d'utilisation est transmise en complément lors de la première opération de transmission (19), l'information de lieu d'utilisation indiquant un lieu d'utilisation du composant examiné (11).

6. Procédé selon la revendication 1, dans lequel les causes possibles de défaut (37) correspondant aux états de défaut signalés sont collectées en exécutant plusieurs fois les étapes du procédé selon la revendication 1, et
dans lequel un dispositif de surveillance (9) est automatiquement informé des causes d'erreur possibles collectées (37) dès qu'une fréquence à laquelle une cause d'erreur possible (37) spécifique à un type de composant donné a été reçue par le dispositif d'analyse (7) dépasse une valeur limite de fréquence prédéterminée.

7. Procédé selon la revendication 6, dans lequel la valeur limite de fréquence est prédéterminée en tenant compte des propriétés physiques et/ou des fonctionnalités du type de composant déterminé.

8. Procédé selon l'une des revendications 6 et 7, dans lequel la valeur limite de fréquence est prédéterminée en tenant compte d'une fréquence d'utilisation du type de composant donné.

9. Procédé selon l'une des revendications 6 à 8, dans lequel, lors de la collecte des causes possibles de défaillance (37), des informations sur le lieu d'utilisation sont en outre reçues, lesdites informations sur le lieu d'utilisation indiquant un lieu d'utilisation du composant examiné (11), et la valeur limite de fréquence étant prédéterminée en tenant compte du lieu d'utilisation du type de composant déterminé.

10. Procédé selon l'une des revendications 6 à 9, dans lequel, dès qu'une possibilité de remédier à une cause d'erreur potentielle a été trouvée, une information à ce sujet est transmise par le dispositif d'analyse (7) au dispositif de rapport (5).

11. Dispositif de création de rapports (1) destiné à la création automatisée de rapports sur des états de défaillance concernant des composants (11) d'une installation de transport de personnes, **caractérisé en ce que** le dispositif de création de rapports (1) est configuré pour exécuter ou commander un procédé selon l'une des revendications 1 à 6.

12. Dispositif de création de rapports (1) selon la revendication 11, dans lequel le dispositif de création de rapports (1) peut être connecté à un dispositif d'évaluation (3), ce qui permet au dispositif d'évaluation (3) peut recevoir des informations provenant du dispositif de génération de rapports (1), et dans lequel le dispositif d'évaluation (3) est prévu pour l'évaluation assistée par ordinateur d'états d'erreur signalés concernant des composants (11) d'un système de transport de personnes ainsi que pour l'information assistée par ordinateur d'un dispositif de surveillance (9) et est configuré pour exécuter ou commander un procédé selon l'une des revendications 7 à 10.

13. Produit logiciel comprenant des instructions lisibles par ordinateur qui amènent un processeur à exécuter ou à commander un procédé selon l'une des revendications 1 à 10.

14. Support lisible par ordinateur, comportant un produit logiciel enregistré sur celui-ci selon la revendication 13.
